(19) Europäisches Patentamt
European Patent Office
Office européen des brevets

(11) **EP 4 300 376 A1**

(12) **EUROPEAN PATENT APPLICATION**

(43) Date of publication:
**03.01.2024 Bulletin 2024/01**

(21) Application number: **23159591.9**

(22) Date of filing: **02.03.2023**

(51) International Patent Classification (IPC):
***G06N 7/01*** *(2023.01)*

(52) Cooperative Patent Classification (CPC):
**G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 JP 2022106092**

(71) Applicant: **Fujitsu Limited**
**Kawasaki-shi, Kanagawa 211-8588 (JP)**

(72) Inventors:
• **Kakuko, Norihiro**
**Kawasaki-shi, Kanagawa, 211-8588 (JP)**
• **Parizy, Matthieu**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING METHOD, INFORMATION PROCESSING PROGRAM, AND INFORMATION PROCESSING APPARATUS**

(57)    An information processing method for a computer to execute a process includes searching for a first parameter for searching for a solution by using an evaluation function included in an Ising model; acquiring an evaluation value of the first parameter based on an energy value of the evaluation function and a time period to reach the energy value; determining a number of iterations for determining that the searching the first parameter converges based on at least one selected from a best evaluation value after the searching the first parameter for a certain number of iterations, a number of bits included in the evaluation function, a type of a constraint, and a number of the constraint; and when the best evaluation value is not updated during the searching for the first parameter for the number of iterations, determining a second parameter which leads to the best evaluation value.

FIG. 3

PARAMETER EVALUATION VALUE

N-k

N

EVALUATION COUNT

SMALL DIFFERENCE MEANS THAT CONVERGENCE HAS PROGRESSED → SET SMALLER NUMBER OF ITERATIONS FOR CONVERGENCE JUDGMENT

PARAMETER EVALUATION VALUE

N-k

N

EVALUATION COUNT

LARGE DIFFERENCE MEANS THAT CONVERGENCE HAS YET TO PROGRESS → SET LARGE NUMBER OF ITERATIONS FOR CONVERGENCE JUDGMENT

EP 4 300 376 A1

**Description**

FIELD

The embodiment discussed herein is related to an information processing method, an information processing program, and an information processing apparatus.

BACKGROUND

Optimization processing is one important field among fields of information processing. Optimization problems are roughly classified into linear programming problems and discrete optimization problems. In the case of the latter problem in large scale, the number of combinations explosively increases and a problem solving method with round-robin calculation of all the combinations consumes a calculation time beyond a realistic range.

As a method of solving such a large-scale discrete optimization problem, there is an Ising machine (also referred to as, for example, a Boltzmann machine) that performs simulated annealing (also referred to as, for example, simulated annealing method) using an Ising type energy function. The Ising machine calculates a problem to be calculated by replacing the problem with an Ising model expressed by a quadratic expression which is a model representing behaviors of spins of magnetic bodies.

There are methods such as grid search and random search for searching for an optimal value of a parameter included in a method of solving an optimization problem (hereafter referred to as an "Ising problem" or an "evaluation function" in some cases) by an Ising machine, such as simulated annealing (SA), genetic algorithm (GA), simulated quantum annealing (SQA), or TabuSearch. According to such a parameter search method, for example, each of various parameter is acquired in a round-robin or random manner, a solution search to be executed by using an evaluation function is executed by using the acquired parameter for a certain period of time, and the parameter is evaluated based on an obtained energy, a time consumed to reach the energy, and the like. The acquisition and evaluation of each of the parameters are iterated to update the evaluation value of the parameter by a better evaluation. When the evaluation value is not updated during a certain number of iterations, it is determined that the parameter search has converged, and the parameter search is ended. An example of the parameter used in searching for a solution by using an evaluation function is a temperature condition in a simulated annealing method or the like.

Japanese Laid-open Patent Publication Nos. 2022-032703 and 2021-144443 and U.S. Patent Application Publication Nos. 2021/0166148 and 2020/0327441 are disclosed as related art.

SUMMARY

[TECHNICAL PROBLEM]

However, in the parameter search in the related art, the search is ended in a case where the evaluation value of the parameter is not updated during a certain number of iterations. Therefore, for example, when the certain number of iterations is set to a large value, the search is unnecessarily performed. Conversely, when the certain number of iterations is set to a small value, the optimal value of the parameter may be possibly overlooked.

According to one aspect, it is an object to provide an information processing method, an information processing program, and an information processing apparatus that are able to more appropriately reduce a parameter search time for an Ising problem.

[SOLUTION TO PROBLEM]

According to an aspect of the embodiments, an information processing method for a computer to execute a process includes searching for a first parameter for searching for a solution by using an evaluation function included in an Ising model; acquiring an evaluation value of the first parameter based on an energy value of the evaluation function obtained by executing the searching for the solution by using the first parameter and a time period to reach the energy value; determining a first number of iterations for determining that the searching the first parameter converges based on at least one selected from a best evaluation value after the searching the first parameter for a certain number of iterations, a number of bits included in the evaluation function, a type of a constraint included in the evaluation function, and a number of the constraint; and when the best evaluation value is not updated during the searching for the first parameter for the first number of iterations, determining a second parameter which leads to the best evaluation value and ending the searching the first parameter.

[ADVANTAGEOUS EFFECTS OF INVENTION]

From one aspect, it is possible to more appropriately reduce a parameter search time for an Ising problem.

BRIEF DESCRIPTION OF DRAWINGS

FIG. 1 is a diagram presenting an example of a parameter search in the related art;
FIG. 2 is a diagram for explaining problems depending on the number of iterations for convergence judgment in the parameter search in the related art;
FIG. 3 is a diagram illustrating an example of determination of the number of iterations for convergence judgment according to Example 1;
FIG. 4 is a diagram illustrating a configuration example of an information processing apparatus according to Example 1;
FIG. 5 is a diagram presenting an example of a parameter search according to Example 1;
FIG. 6 is a diagram presenting an example of a parameter search according to Example 2;
FIG. 7 is a diagram presenting an example of a parameter search according to Example 3; and
FIG. 8 is a diagram for explaining a hardware configuration example.

DESCRIPTION OF EMBODIMENTS

Hereinafter, Examples of an information processing method, an information processing program, and an information processing apparatus according to the present embodiment will be described in detail with reference to the drawings. The present embodiment is not limited to these Examples. Examples may be combined with each other as appropriate within the scope without contradiction. The present disclosure is not limited to a case where an optimization problem is solved by using an Ising model, and may be applied to other cases, for example, such as one where an optimization problem is solved by using a model including a term of degree of 3 or higher.

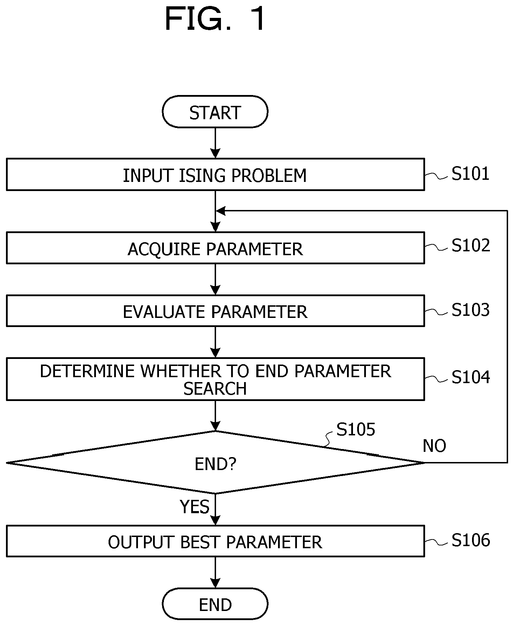

First, the method in the related art of searching for an optimal value of a parameter included in a method of solving an Ising problem will be described. FIG. 1 is a diagram presenting an example of a parameter search in the related art. Although part of processing for a parameter search for an Ising problem may be performed by an Ising machine while the other part of the processing may be performed by an information processing apparatus other than the Ising machine, the processing for a parameter search will be described as being executed simply by a single information processing apparatus 10 in the explanation of FIG. 1.

First, as presented in FIG. 1, the information processing apparatus 10 inputs prestored input data on an evaluation function to be input to an Ising machine, the number of bits included in the evaluation function, and constraints when the evaluation function includes constraint terms (step S101).

Next, the information processing apparatus 10 acquires a prestored parameter such as a maximum temperature or minimum temperature for a solution search to be executed by using the evaluation function (step S102). For one type of parameter, parameters having different values are stored in advance in the information processing apparatus 10 or the like, and the information processing apparatus 10 iteratively acquires and evaluates each of the parameters. For the parameter acquisition in the step S102, the information processing apparatus 10 may acquire the parameters, for example, in a round-robin manner as in the grid search or randomly as in the random search.

Next, the information processing apparatus 10 evaluates the parameter acquired in step S102 (step S103). The parameter evaluation in step S103 is executed by using the evaluation function input in step S101 and the target parameter and based on, for example, an energy value that is a value of the evaluation function obtained by executing a solution search to be executed by using the evaluation function for a preset time, a time consumed to reach the energy value, and the like. For example, the information processing apparatus 10 highly evaluates a parameter with which the energy value obtained by executing the solution search to be executed by using the evaluation function for the preset time is low and the time consumed to reach the energy value is short. In this step, an evaluation value that quantitatively indicates the evaluation result may be calculated.

After that, the information processing apparatus 10 determines whether to end the parameter value search (in step S104). The end determination may be processing of determining that the parameter search has converged and is to be ended when the update of the parameter evaluation, for example, the update of the best evaluation value to the evaluation value calculated in the parameter evaluation in step S103 is not performed during a preset certain number of iterations.

When determining in the end determination in step S104 that the parameter search has not converged yet and is not to be ended (step S105: No), the information processing apparatus 10 returns to step S102, acquires the next parameter, and iterates the processing in steps S102 to S104.

On the other hand, when determining in the end determination in step S104 that the parameter search has converged and is to be ended (step S105: Yes), the information processing apparatus 10 outputs, for example, the parameter leading to the best evaluation value as the best parameter (step S106). After execution of step S106, the parameter search illustrated in FIG. 1 is ended.

However, in the parameter search in the related art as presented in FIG. 1, the search end is determined when the parameter evaluation is not updated during the certain number of iterations. The certain number of iterations for use to determine the parameter search end, for example, the number of iterations for convergence judgment, is set in advance to an arbitrary number.

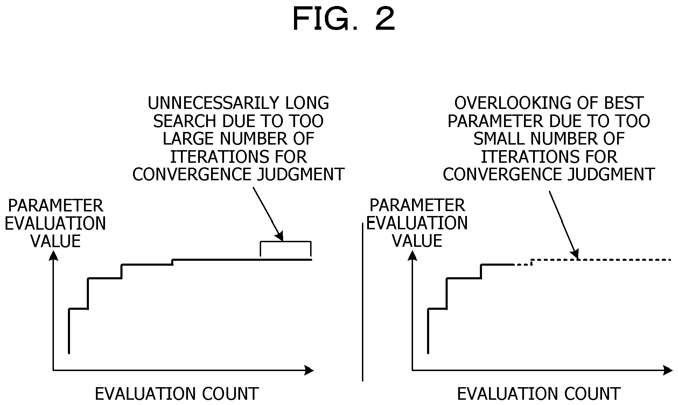

FIG. 2 is a diagram for explaining problems depending on the number of iterations for convergence judgment in the parameter search in the related art. FIG. 2 illustrates two types of graphs in which a horizontal axis indicates a parameter evaluation count and a vertical axis indicates a parameter evaluation value. A difference between the right and left graphs is a set number of iterations for convergence judgment, and FIG. 2 illustrates examples in which the set number of iterations for convergence judgment is larger in the left graph than in the right graph.

As illustrated on the left side of FIG. 2, when the set number of iterations for convergence judgment is large, an unnecessarily long search may be continued without updating the evaluation of the parameter in some cases. On the other hand, as illustrated on the right side of FIG. 2, when the set number of iterations for convergence judgment is small, the search may be ended before the evaluation of the parameter is further updated and the best parameter may be overlooked. To address this, in the present embodiment, the information processing apparatus 10 determines a degree of progress of convergence of the parameter search based on the difference between the evaluation values of the parameter, and determines the number of iterations for convergence judgment.

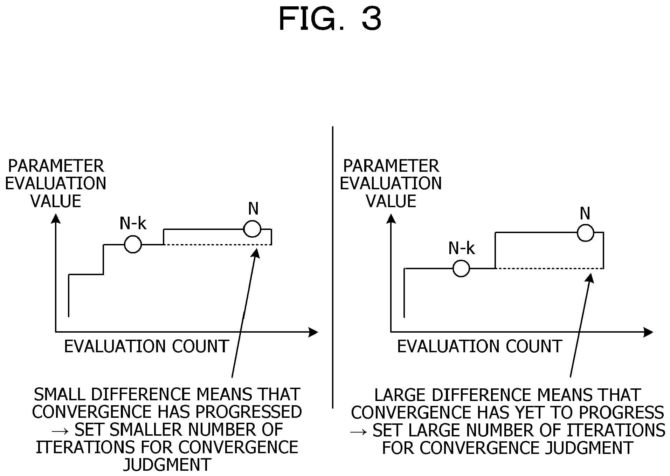

FIG. 3 is a diagram illustrating an example of determination of the number of iterations for convergence judgment according to Example 1. As illustrated on the left side in FIG. 3, for example, the information processing apparatus 10 compares the evaluation values of the parameter at (N-k)-th parameter evaluation and N-th parameter evaluation, determines that the convergence of the parameter search has progressed when the difference between the evaluation values is smaller than a threshold, and resets the number of iterations for convergence judgment to a smaller number.

On the other hand, as illustrated on the right side in FIG. 3, for example, the information processing apparatus 10 determines that the convergence of the parameter search has not progressed when the difference between the evaluation values of the parameter at (N-k)-th parameter evaluation and N-th parameter evaluation is equal to or larger than the threshold value, and resets the number of iterations for convergence judgment to a larger number.

[Functional Configuration of Information Processing Apparatus 10]

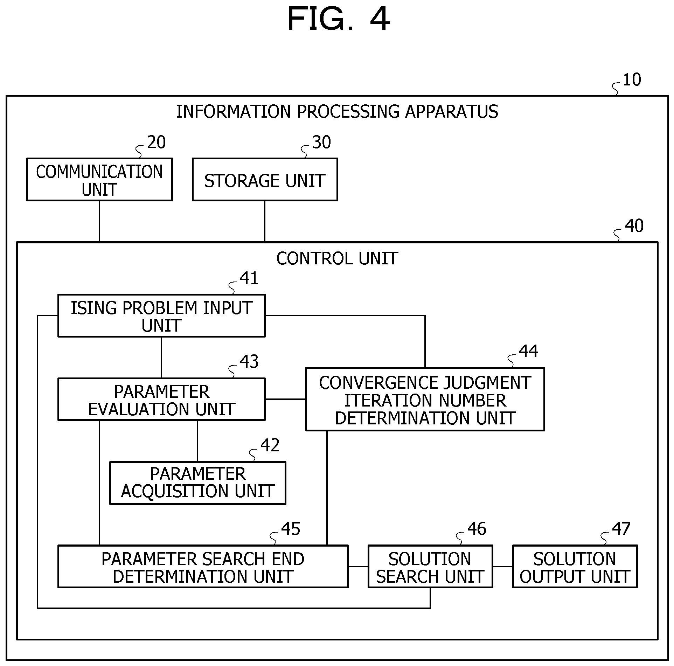

Next, a functional configuration of the information processing apparatus 10 serving as an execution entity according to the present embodiment will be described. FIG. 4 is a diagram illustrating a configuration example of the information processing apparatus 10 according to Example 1. As illustrated in FIG. 4, the information processing apparatus 10 includes a communication unit 20, a storage unit 30, and a control unit 40.

The communication unit 20 is a processing unit that controls communication with another apparatus such as an information processing terminal 100, and is, for example, a communication interface such as a network interface card.

The storage unit 30 has a function of storing various types of data and programs to be executed by the control unit 40, and is implemented by, for example, a storage device such as a memory or a hard disk. For example, the storage unit 30 stores input data such as an evaluation function to be input to an Ising machine, the number of bits included in the evaluation function, and the types and numbers of constraint terms included in the evaluation function, and various types of information such as parameters for a solution search to be executed by using the evaluation function. The above-described information stored in the storage unit 30 is merely an example, and the storage unit 30 may store various types of information other than the above-described information.

The control unit 40 is a processing unit that controls the entire information processing apparatus 10, and is, for example, a processor or the like. The control unit 40 includes an Ising problem input unit 41, a parameter acquisition unit 42, a parameter evaluation unit 43, a convergence judgment iteration number determination unit 44, a parameter search end determination unit 45, a solution search unit 46, a solution output unit 47, and the like. Each of the processing units is an example of an electronic circuit included in the processor or an example of a process executed by the processor.

For example, the Ising problem input unit 41 inputs data on the evaluation function to be input to the Ising machine to the parameter evaluation unit 43, and inputs the number of bits included in the evaluation function and the types and numbers of constraints when the evaluation function includes constraint terms to the convergence judgment iteration number determination unit 44. For example, the Ising problem input unit 41 inputs data on an Ising problem to the solution search unit 46 at the time of the solution search to be executed by using the evaluation function.

For example, the parameter acquisition unit 42 acquires each of parameters having different values in a round-robin or random manner from a parameter group for a maximum temperature, a minimum temperature, or the like targeted for an optimal value search, and inputs the parameter to the parameter evaluation unit 43.

For example, as a value search for the parameter in the solution search to be executed by using the evaluation function, the parameter evaluation unit 43 calculates an evaluation value of the parameter. For example, the parameter evaluation unit 43 uses the evaluation function input by the Ising problem input unit 41 and the parameter acquired by the parameter acquisition unit 42 to execute the solution search to be executed by using the evaluation function for a preset time. The parameter evaluation unit 43 calculates the evaluation value of the parameter based on an energy value obtained by the solution search and a time consumed to reach the energy value. Regarding the calculation of the evaluation value, for example, a quantitative evaluation value may be calculated such that a parameter is highly evaluated with which the energy value obtained by the solution search to be executed using the evaluation function is low and the time consumed to reach the energy value is short.

For example, the convergence judgment iteration number determination unit 44 determines the number of iterations for convergence judgment for the value search based on at least one type of information among the best evaluation value, the number of bits, and the types and numbers of constraints.

For example, before the parameter evaluation unit 43 executes the value search, the convergence judgment iteration number determination unit 44 determines the number of iterations for convergence judgment based on at least one type of information out of the number of bits and the types and numbers of constraints included in the evaluation function input by the Ising problem input unit 41. The types and numbers of constraints may be based on a case where the evaluation function includes constraint terms. For example, the convergence judgment iteration number determination unit 44 calculates the number of iterations for convergence judgment by using following Formula (1) or (2). According to these formulas, a larger number of iterations for convergence judgment is determined as the number of bits included in the evaluation function and/or the number of constraints of each type increases.

$$\text{Number of Iterations for Convergence Judgment} = a(\text{Number of Bits in Ising Problem}) + b1(\text{Number of Constraints 1}) + b2(\text{Number of Constraints 2}) + c$$

$$\text{Number of Iterations for Convergence Judgment} = a(\text{Number of Bits in Ising Problem}) \times (\text{Number of Constraints 1}) \times (\text{Number of Constraints 2}) + c$$

In Formulas (1) and (2), a, b1, and b2 are weighting coefficients for the number of bits included in the evaluation function, the number of constraints 1, and the number of constraints 2, respectively. In addition, c is an arbitrary adjustment value. Although there are two types of constraints 1 and 2 in the examples of Formulas (1) and (2), it is a matter of course that the types of constraints are not limited to two. For example, a table may be prepared which holds a pattern such that x is set as the number of iterations for convergence judgment when the number of bits is equal to or less than a first threshold, the number of constraints 1 is equal to or less than a second threshold, and the number of constraints 2 is equal to or less than a third threshold. Thus, the convergence judgment iteration number determination unit 44 may determine the number of iterations for convergence judgment by acquiring the number that satisfies the conditions from the pattern table.

For example, after the parameter evaluation unit 43 executes the value search, the convergence judgment iteration number determination unit 44 determines the number of iterations for convergence judgment based on the best evaluation value calculated by the parameter evaluation unit 43.

For example, the convergence judgment iteration number determination unit 44 may determine a degree of progress of convergence based on a difference between the evaluation value of the parameter after the parameter evaluation unit 43 executes a first number of iterations of the value search and the evaluation value after the parameter evaluation unit 43 executes a second number of iterations of the value search, and then determine the number of iterations for convergence judgment. Here, the first number of iterations and the second number of iterations correspond to N-k and N, respectively.

For example, the convergence judgment iteration number determination unit 44 may determine a degree of progress of convergence based on a difference between the evaluation value after the parameter evaluation unit 43 executes the value search once and a preset theoretical optimal value, and then determine the number of iterations for convergence judgment.

For example, the convergence judgment iteration number determination unit 44 calculates the number of iterations for convergence judgment by using following Formula (3) or (4). According to these expressions, a smaller number of iterations for convergence judgment is determined as, for example, a difference between the (N-k)-th and N-th evaluation values in the value search, a difference of energy at the first evaluation from the theoretical value, and/or a time consumed to reach the energy value decreases.

$$\text{Number of Iterations for Convergence Judgment} = g(\text{Difference Between (N-K)-th and N-th Evaluation Values}) + h(\text{Energy Difference in First Evaluation}) + i(\text{Time for Reaching First Evaluation}) + c$$

$$\text{Number of Iterations for Convergence Judgment} = g(\text{Difference Between (N-K)-th and N-th Evaluation Values}) \times (\text{Energy Difference in First Evaluation}) \times (\text{Time for Reaching First Evaluation}) + c$$

In Formulas (3) and (4), g, h, and i are weighting coefficients for the difference between the (N-K)-th and N-th evaluation values, the energy difference in the first evaluation, and the time for reaching the first evaluation, respectively. In addition, c is an arbitrary adjustment value. For example, a table may be prepared which holds a pattern such that y is set as the number of iterations for convergence judgment when the difference between the (N-K)-th and N-th evaluation values is equal to or less than a fourth threshold, the energy difference in the first evaluation is equal to or less than a fifth threshold, and the time for reaching the first evaluation is equal to or less than a sixth threshold. Thus, the convergence judgment iteration number determination unit 44 may determine the number of iterations for convergence judgment by acquiring the number that satisfies the conditions from the pattern table.

For example, the convergence judgment iteration number determination unit 44 may determine a formula for use to determine the number of iterations for convergence judgment based on the difference between the number of iterations for convergence judgment calculated from the features of the problem by using Formula (1) or (2) and the number of iterations for convergence judgment calculated from the evaluation of the parameter by using Formula (3) or (4). For example, the convergence judgment iteration number determination unit 44 may use Formula (1) or (2) when the difference between the number of iterations for convergence judgment calculated from the features of the problem and the number of iterations for convergence judgment calculated from the evaluation of the parameter is small, or use Formula (3) or (4) when the difference is large. The convergence judgment iteration number determination unit 44 may determine the number of iterations for convergence judgment in accordance with following Formula (5) by using, as a weighting coefficient w, the difference between the number of iterations for convergence judgment calculated from the features of the problem and the number of iterations for convergence judgment calculated from the evaluation of the parameter.

$$\text{Number of Iterations for Convergence Judgment} = d/(d + w) \times \text{Number of Iterations for Convergence Judgment Calculated from Features of Problem} + w/(d + w) \times \text{Number of Iterations for Convergence Judgment Calculated from Evaluation of Parameter}$$

In Formula (5), d is an arbitrary integer. The convergence judgment iteration number determination unit 44 may determine the number of iterations for convergence judgment by combining Formula (1) or (2) with Formula (3) or (4).

$$\text{Number of Iterations for Convergence Judgment} = a(\text{Number of Bits in Ising Problem}) + b1(\text{Number of Constraints 1}) + b2(\text{Number of Constraints 2}) + g(\text{Difference Between (N-K)-th and N-th Evaluation Values}) + h(\text{Energy Difference in First Evaluation}) + i(\text{Time for Reaching First Evaluation}) + c$$

$$\text{Number of Iterations for Convergence Judgment} = a(\text{Number of Bits in Ising Problem}) \times (\text{Number of Constraints 1}) \times (\text{Number of Constraints 2}) \times g(\text{Difference Between (N-K)-th and N-th Evaluation Values}) \times (\text{Energy Difference in First Evaluation}) \times (\text{Time for Reaching First Evaluation}) + c$$

Formula (6) is a formula obtained by combining Formulas (1) and (3). Formula (7) is a formula obtained by combining Formulas (2) and (4).

When the best evaluation value is not updated while the parameter evaluation unit 43 executes the value search in the number of iterations determined by the convergence judgment iteration number determination unit 44, the parameter search end determination unit 45 determines the parameter corresponding to the best evaluation value as the parameter to be used for the solution search. After the parameter is determined, the value search may be ended.

For example, the solution search unit 46 uses the parameter determined by the parameter search end determination unit 45 to execute the solution search to be executed by using the evaluation function.

For example, the solution output unit 47 outputs a solution obtained by executing the solution search by the solution search unit 46. The output of the solution may be output to a data file, or may be display on a display unit, a display device, or the like included in the information processing apparatus 10.

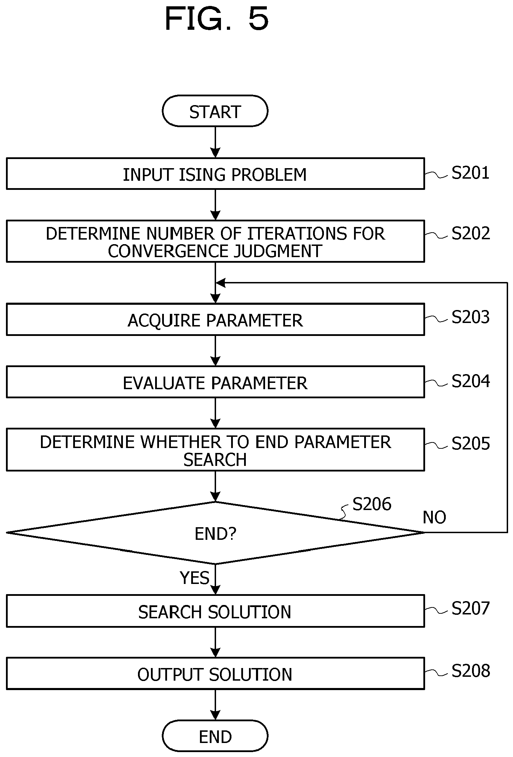

Next, parameter searches to be executed by the information processing apparatus 10 according to the present embodiment will be described along sequences with reference to flowcharts illustrated in FIGs. 5 to 7. Although the parameter searches illustrated in FIGs. 5 to 7 are different types of processing and are referred to as Examples 1 to 3, respectively, the configuration of the information processing apparatus 10 as an operation entity may be the same as the configuration of the information processing apparatus 10 according to Example 1 as illustrated in FIG. 4.

FIG. 5 is a diagram presenting an example of a parameter search according to Example 1. First, as presented in FIG. 5, the information processing apparatus 10 inputs, for example, prestored input data on an evaluation function to be input to the Ising machine, the number of bits included in the evaluation function, and constraints when the evaluation function includes constraint terms (step S201). The Ising problem input in step S201 is similar to the Ising problem input in step S101 in FIG. 1.

Subsequently, for example, the information processing apparatus 10 determines the number of iterations for convergence judgment based on the features of the problem, for example, such as the number of bits included in the evaluation function input in step S201 (step S202). In this determination, the information processing apparatus 10 may use, for example, Formula (1) or (2).

Next, the information processing apparatus 10 acquires a prestored parameter, such as a maximum temperature or minimum temperature, targeted for an optimal value search (step S203). The parameter acquisition in step S203 is similar to the parameter acquisition in step S102 in FIG. 1.

Next, the information processing apparatus 10 evaluates the parameter acquired in step S203 (step S204). The parameter evaluation in step S204 is similar to the parameter evaluation in step S103 in FIG. 1.

Subsequently, for example, the information processing apparatus 10 determines whether or not to end the parameter value search (step S205). The end determination may be processing of determining that the parameter search has converged and is to be ended when the update of the parameter evaluation, for example, the update of the best evaluation value to the evaluation value calculated in the parameter evaluation in step S204 is not performed during the number of iterations determined in step S202.

When determining in the end determination in step S205 that the parameter search has not converged yet and is not to be ended (step S206: No), the information processing apparatus 10 returns to step S203, acquires the next parameter, and iterates the processing in steps S203 to S205.

On the other hand, when determining that the parameter search has converged and is to be ended (step S206:

Yes), the information processing apparatus 10 uses, for example, the parameter leading to the best evaluation value as the parameter to execute the solution search to be executed by using the evaluation function (step S207).

Next, for example, the information processing apparatus 10 outputs the solution obtained by executing the solution search in step S207 (step S208). After execution of step S208, the parameter search presented in FIG. 5 is ended.

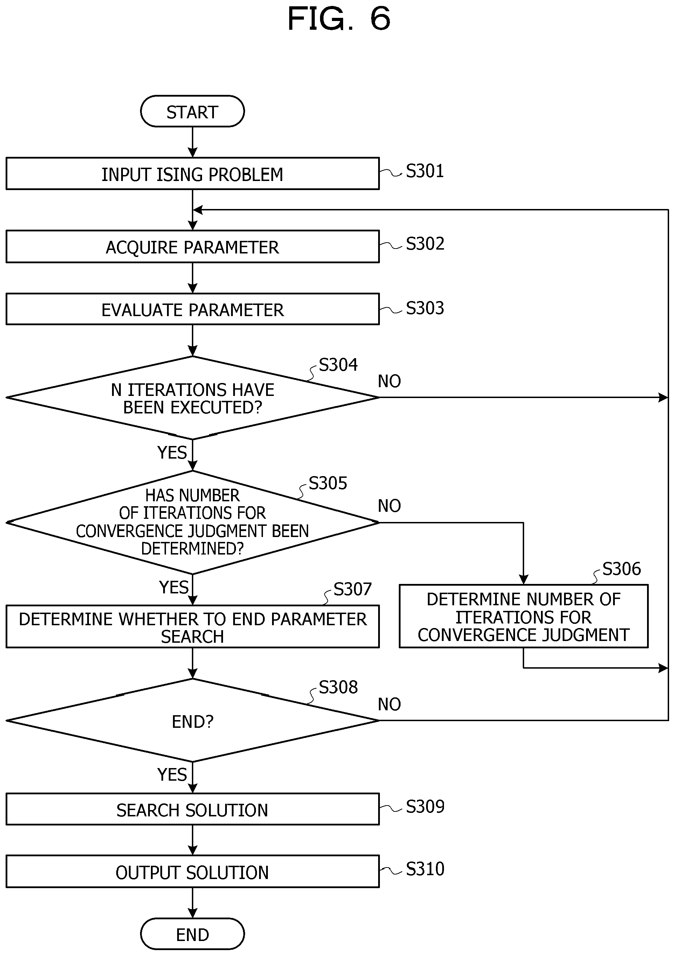

FIG. 6 is a diagram presenting an example of a parameter search according to Example 2. First, as presented in FIG. 6, the information processing apparatus 10 inputs, for example, prestored input data on an evaluation function to be input to the Ising machine, the number of bits included in the evaluation function, and constraints when the evaluation function includes constraint terms (step S301). The Ising problem input in step S301 is similar to the Ising problem input in step S201 in FIG. 5.

Next, the information processing apparatus 10 acquires a prestored parameter, such as a maximum temperature or minimum temperature, targeted for an optimal value search (step S302). The parameter acquisition in step S302 is similar to the parameter acquisition in step S203 in FIG. 5.

Next, the information processing apparatus 10 evaluates the parameter acquired in step S302 (step S303). The parameter evaluation in step S303 is similar to the parameter evaluation in step S204 in FIG. 5.

After that, the information processing apparatus 10 determines whether the parameter acquisition in step S302 and the parameter evaluation in step S303 have been executed in N iterations, where N is a predetermined certain number (step S304). When the parameter acquisition and the parameter evaluation have not been executed in N iterations (step S304: No), the information processing apparatus 10 returns to step S302, acquires the next parameter, and iterates the processing in steps S302 and S303.

On the other hand, when the parameter acquisition and the parameter evaluation have been executed in N iterations (step S304: Yes), the information processing apparatus 10 determines whether the number of iterations for convergence judgment has been already determined (step S305), for example. When determining that the number of iterations for convergence judgment has not been determined yet (step S305: No), the information processing apparatus 10 determines the number of iterations for convergence judgment based on the parameter evaluation in step S303 (step S306). In this determination, the information processing apparatus 10 may use, for example, Formula (3) or (4).

After execution of step S306, the information processing apparatus 10 returns to step S302, acquires the next parameter, and iterates the processing in steps S302 to S304. After determining the number of iterations for convergence judgment in step S306, the information processing apparatus 10 makes the determination in step S304 by replacing the certain number N in step S304 with the number of iterations for convergence judgment determined in step S306.

Meanwhile, when determining that the number of iterations for convergence judgment has been determined (step S305: Yes), the information processing apparatus 10 determines whether to end the parameter value search (step S307), for example. The end determination may be processing of determining that the parameter search has converged and is to be ended when the update of the parameter evaluation, for example, the update of the best evaluation value to the evaluation value calculated in the parameter evaluation in step S303 is not performed during the number of iterations determined in step S306.

When determining in the end determination in step S307 that the parameter search has not converged yet and is not to be ended (step S308: No), the information processing apparatus 10 returns to step S302, acquires the next parameter, and iterates the processing in steps S302 to S307.

On the other hand, when determining that the parameter search has converged and is to be ended (step S308: Yes), the information processing apparatus 10 uses, for example, the parameter leading to the best evaluation value as the parameter to execute the solution search to be executed by using the evaluation function (step S309).

Next, for example, the information processing apparatus 10 outputs the solution obtained by executing the solution search in step S309 (step S310). After execution of step S310, the parameter search illustrated in FIG. 6 is ended.

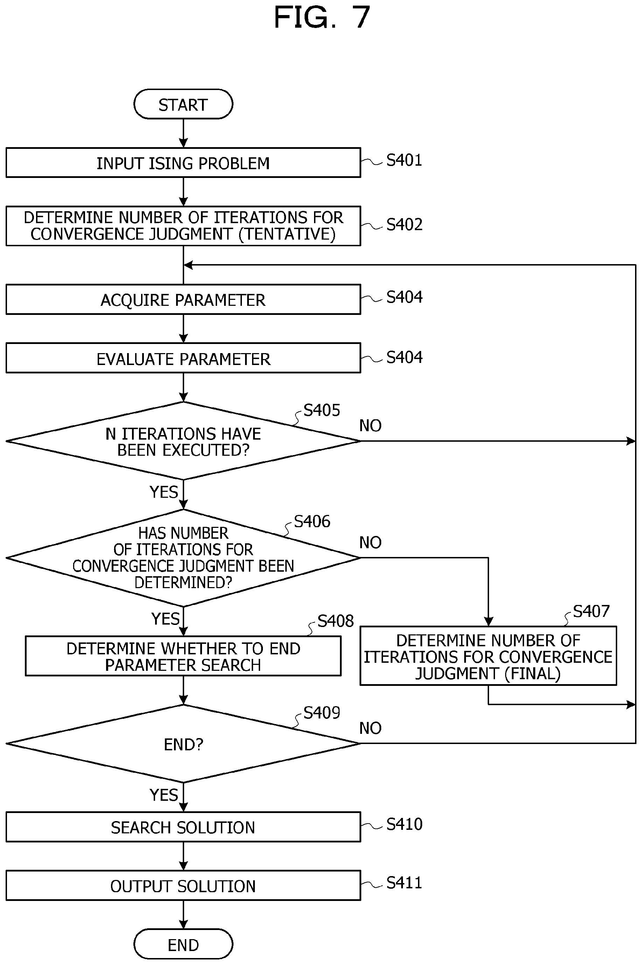

FIG. 7 is a diagram presenting an example of a parameter search according to Example 3. The parameter search according to Example 3 is processing in which the determinations of the numbers of iterations for convergence judgment in both of Examples 1 and 2 are performed in combination by using the determination of the number of iterations for convergence judgment in Example 1 as a tentative determination and the determination of the number of iterations for convergence judgment in Example 2 as a final determination.

First, as presented in FIG. 7, the information processing apparatus 10 inputs, for example, prestored input data on an evaluation function to be input to the Ising machine, the number of bits included in the evaluation function, and constraints when the evaluation function includes constraint terms (step S401). The Ising problem input in step S401 is similar to the Ising problem input in step S201 in FIG. 5 or step S301 in FIG. 6.

Subsequently, for example, the information processing apparatus 10 determines a tentative number of iterations for convergence judgment based on the features of the problem, for example, such as the number of bits included in the evaluation function input in step S401 (step S402). In this determination, the information processing apparatus 10 may use, for example, Formula (1) or (2). The determination of the number of iterations for convergence judgment in step S402 is similar to the determination of the number of iterations for convergence judgment in step S202 in FIG. 5.

Next, the information processing apparatus 10 acquires a prestored parameter, such as a maximum temperature or minimum temperature, targeted for an optimal value search (step S403). The parameter acquisition in step S403 is similar to the parameter acquisition in step S203 in FIG. 5 or step S302 in FIG. 6.

Next, the information processing apparatus 10 evaluates the parameter acquired in step S403 (step S404). The parameter evaluation in step S404 is similar to the parameter evaluation in step S204 in FIG. 5 or step S303 in FIG. 6.

After that, the information processing apparatus 10 determines whether the parameter acquisition in step S403 and the parameter evaluation in step S404 have been executed in N iterations, where N is a predetermined certain number (step S405). When the parameter acquisition and the parameter evaluation have not been executed in N iterations (step S405: No), the information processing apparatus 10 returns to step S403, acquires the next parameter, and iterates the processing in steps S403 and S404.

On the other hand, when the parameter acquisition and the parameter evaluation have been executed in N iterations (step S405: Yes), the information processing apparatus 10 determines whether the number of iterations for convergence judgment has been already determined (step S406), for example. When determining that the number of iterations for convergence judgment has not been determined yet (step S406: No), the information processing apparatus 10 determines a final number of iterations for convergence judgment based on the parameter evaluation in step S404 (step S407). In this determination, the information processing apparatus 10 may use, for example, Formula (3) or (4).

After execution of step S407, the information processing apparatus 10 returns to step S403, acquires the next parameter, and iterates the processing in steps S403 to S405. After determining the number of iterations for convergence judgment in step S407, the information processing apparatus 10 makes the determination in step S405 by replacing the certain number N in step S405 with the number of iterations for convergence judgment determined in step S407.

Meanwhile, when determining that the number of iterations for convergence judgment has been determined (step S406: Yes), the information processing apparatus 10 determines whether to end the parameter value search (step S408), for example. The end determination may be processing of determining that the parameter search has converged and is to be ended when the update of the parameter evaluation, for example, the update of the best evaluation value to the evaluation value calculated in the parameter evaluation in step S404 is not performed during the number of iterations determined in step S407.

When determining in the end determination in step S408 that the parameter search has not converged yet and is not to be ended (step S409: No), the information processing apparatus 10 returns to step S403, acquires the next parameter, and iterates the processing in steps S403 to S408.

On the other hand, when determining that the parameter search has converged and is to be ended (step S409: Yes), the information processing apparatus 10 uses, for example, the parameter leading to the best evaluation value as the parameter to execute the solution search to be executed by using the evaluation function (step S410).

Next, for example, the information processing apparatus 10 outputs the solution obtained by executing the solution search in step S410 (step S411). After execution of step S411, the parameter search illustrated in FIG. 7 is ended.

[Effects]

As described above, the information processing apparatus 10: inputs prestored input data on an evaluation function to be input to the Ising machine, the number of bits included in the evaluation function, and constraints when the evaluation function includes constraint terms; as a value search for a parameter in a solution search to be executed by using the evaluation function, calculating an evaluation value of the parameter based on an energy value that is a value of the evaluation function obtained by executing the solution search using the evaluation function and the parameter for a preset time, and a time consumed to reach the evaluation value; determines the number of iterations for convergence judgment for the value search based on at least one type of information among the best evaluation value after execution of a preset number of iterations of the value search, the number of bits, and the types and numbers of constraints; determines, as the parameter for used in the solution search, the parameter leading to the best evaluation value when the best evaluation value is not updated during exertion of the value search in the determined number of iterations; and ends the value search.

Determining the number of iterations for convergence judgment for the value search based on the features of the Ising problem and/or the parameter evaluation, the information processing apparatus 10 is able to more appropriately reduce the parameter search time for the Ising problem.

The information processing apparatus 10 executes the solution search for the evaluation function by using the parameter, and outputs the solution obtained by executing the solution search.

Accordingly, the information processing apparatus 10 is able to maintain the accuracy of the solution search comparable to that in the related art while more appropriately reducing the parameter search time for the Ising problem.

The processing of determining the number of iterations for convergence judgment executed by the information processing apparatus 10 includes processing of determining the number of iterations for convergence judgment based on at least one type of information out of the number of bits and the types and numbers of constraints before the execution of the value search.

Accordingly, the information processing apparatus 10 is able to more appropriately reduce the parameter search time for the Ising problem.

The processing of determining the number of iterations for convergence judgment executed by the information processing apparatus 10 includes processing of determining the number of iterations for convergence judgment based on the best evaluation value after the execution of the value search.

Accordingly, the information processing apparatus 10 is able to more appropriately reduce the parameter search time for the Ising problem.

The processing of determining the number of iterations for convergence judgment executed by the information processing apparatus 10 includes processing of determining a tentative number of iterations for convergence judgment based on at least one type of information out of the number of bits and the types and numbers of constraints before the execution of the value search, and determining a final number of iterations for convergence judgment based on the best evaluation value after the execution of the value search.

Accordingly, the information processing apparatus 10 is able to more appropriately reduce the parameter search time for the Ising problem.

The processing of determining the number of iterations for convergence judgment executed by the information processing apparatus 10 includes processing of determining the number of iterations for convergence judgment based on the difference between the evaluation value after execution of a first number of iterations of the value search and the evaluation value after execution of a second number of iterations of the value search.

Accordingly, the information processing apparatus 10 is able to more appropriately reduce the parameter search time for the Ising problem.

The processing of determining the number of iterations for convergence judgment executed by the information processing apparatus 10 includes processing of determining the number of iterations for convergence judgment based on the difference between the evaluation value after the value search is executed once and the preset theoretical optimal value.

Accordingly, the information processing apparatus 10 is able to more appropriately reduce the parameter search time for the Ising problem.

[System]

Unless otherwise specified, the processing procedures, control procedures, specific names, and information including various types of data and parameters described above in the specification and the drawings may be arbitrarily changed. The specific examples, distributions, numerical values, and so forth described in Examples are merely exemplary and may be arbitrarily changed.

Each constituent element in each apparatus illustrated in the drawing is of a functional concept, and does not have to be configured physically as illustrated in the drawing. For example, the specific form of distribution or integration of each apparatus is not limited to that illustrated in the drawing. For example, the entirety or part of the apparatus may be configured so as to be functionally or physically distributed or integrated in arbitrary units in accordance with various types of loads, usage states, or the like. All or arbitrary part of the processing functions performed by each apparatus may be implemented by a CPU and a program analyzed and executed by the CPU or may be implemented by hardware using wired logic.

[Hardware]

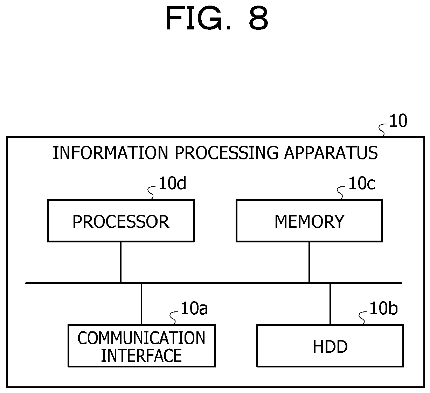

FIG. 8 is a diagram for explaining a hardware configuration example. As illustrated in FIG. 8, the information processing apparatus 10 includes a communication interface 10a, a hard disk drive (HDD) 10b, a memory 10c, and a processor 10d. The components illustrated in FIG. 8 are coupled to each other by a bus or the like.

The communication interface 10a is a network interface card or the like and performs communication with other servers. The HDD 10b stores programs for causing the functions illustrated in FIG. 4 to operate, a database (DB), and the like.

The processor 10d is a hardware circuit that reads, from the HDD 10b or the like, a program for executing processing similar to that of the processing units illustrated in FIG. 4 and loads the program to the memory 10c to operate a process of executing each of the functions illustrated in FIG. 4 and so forth. For example, this process executes a function similar to that of each of the processing units included in the information processing apparatus 10.

The information processing apparatus 10 operates as an information processing apparatus that executes operation control processing by reading and executing the program for executing the processing similar to that of the processing units illustrated in FIG. 4. The information processing apparatus 10 may also achieve functions similar to the functions in Examples described above by reading the program from a recording medium with a medium reading device and executing the read program. The execution of this program described in this other example is not limited to the execution by the information processing apparatus 10. For example, the present embodiment may be also similarly applied to a case where another computer executes the program or a case where the information processing apparatus 10 and another computer execute the program in cooperation with each other.

The program for executing the processing similar to that of the processing units illustrated in FIG. 4 may be distributed through a network such as the Internet. The program may be recorded on a computer-readable recording medium such as a hard disk, a flexible disk (FD), a compact disc read-only memory (CD-ROM), a magneto-optical (MO) disk, or a Digital Versatile Disc (DVD) and may be executed by being read from the recording medium by a computer.

**Claims**

1. An information processing method for a computer to execute a process comprising:

   searching for a first parameter for searching for a solution by using an evaluation function included in an Ising model;
   acquiring an evaluation value of the first parameter based on an energy value of the evaluation function obtained by executing the searching for the solution by using the first parameter and a time period to reach the energy value;
   determining a first number of iterations for determining that the searching the first parameter converges based on at least one selected from a best evaluation value after the searching the first parameter for a certain number of iterations, a number of bits included in the evaluation function, a type of a constraint included in the evaluation function, and a number of the constraint; and
   when the best evaluation value is not updated during the searching for the first parameter for the first number of iterations, determining a second parameter which leads to the best evaluation value and ending the searching the first parameter.

2. The information processing method according to claim 1, wherein the process further comprising:

   searching for a solution by using the evaluation function and the second parameter; and
   outputting the solution.

3. The information processing method according to claim 1, wherein
   the determining the first number includes determining the first number based on at least one selected from the number of bits, the type of the constraint, and the number of the constraint, before the searching for the first parameter.

4. The information processing method according to claim 1, wherein
   the determining the first number includes determining the first number based on the best evaluation value after the searching for the first parameter.

5. The information processing method according to claim 1, wherein
   the determining the first number includes:

   determining a second number of iterations based on at least one selected from the number of bits, the type of the constraint, and the number of the constraint, before the searching for the first parameter; and
   determining the first number based on the second number and the best evaluation value after the searching for the first parameter.

6. The information processing method according to claim 1, wherein
   the determining the first number includes determining the first number based on a difference between a first evaluation value after the searching for the first parameter for a third number of iterations and a second evaluation value evaluation value after the searching for the first parameter for a third number of iterations.

7. The information processing method according to claim 1, wherein
   the determining the first number includes determining the first number based on a difference between a third evaluation value after the searching for the first parameter once and a certain value.

8. An information processing program that causes at least one computer to execute a process, the process comprising:

   searching for a first parameter for searching for a solution by using an evaluation function included in an Ising model;

acquiring an evaluation value of the first parameter based on an energy value of the evaluation function obtained by executing the searching for the solution by using the first parameter and a time period to reach the energy value; determining a first number of iterations for determining that the searching the first parameter converges based on at least one selected from a best evaluation value after the searching the first parameter for a certain number of iterations, a number of bits included in the evaluation function, a type of a constraint included in the evaluation function, and a number of the constraint; and

when the best evaluation value is not updated during the searching for the first parameter for the first number of iterations, determining a second parameter which leads to the best evaluation value and ending the searching the first parameter.

9. The information processing program according to claim 8, wherein the process further comprising:

searching for a solution by using the evaluation function and the second parameter; and outputting the solution.

10. The information processing program according to claim 8, wherein the determining the first number includes determining the first number based on at least one selected from the number of bits, the type of the constraint, and the number of the constraint, before the searching for the first parameter.

11. The information processing program according to claim 8, wherein the determining the first number includes determining the first number based on the best evaluation value after the searching for the first parameter.

12. The information processing program according to claim 8, wherein the determining the first number includes:

determining a second number of iterations based on at least one selected from the number of bits, the type of the constraint, and the number of the constraint, before the searching for the first parameter; and determining the first number based on the second number and the best evaluation value after the searching for the first parameter.

13. The information processing program according to claim 8, wherein the determining the first number includes determining the first number based on a difference between a first evaluation value after the searching for the first parameter for a third number of iterations and a second evaluation value evaluation value after the searching for the first parameter for a third number of iterations.

14. The information processing program according to claim 8, wherein the determining the first number includes determining the first number based on a difference between a third evaluation value after the searching for the first parameter once and a certain value.

15. An information processing apparatus comprising a control unit configured to:

search for a first parameter for searching for a solution by using an evaluation function included in an Ising model, acquire an evaluation value of the first parameter based on an energy value of the evaluation function obtained by executing the searching for the solution by using the first parameter and a time period to reach the energy value, determine a first number of iterations for determining that the searching the first parameter converges based on at least one selected from a best evaluation value after the searching the first parameter for a certain number of iterations, a number of bits included in the evaluation function, a type of a constraint included in the evaluation function, and a number of the constraint, and

when the best evaluation value is not updated during the searching for the first parameter for the first number of iterations, determine a second parameter which leads to the best evaluation value and ending the searching the first parameter.

# FIG. 1

```
          ┌─────────────┐
          │    START    │
          └──────┬──────┘
                 ▼
    ┌──────────────────────────┐
    │   INPUT ISING PROBLEM    │──── S101
    └──────────┬───────────────┘
               ▼  ◄─────────────────────┐
    ┌──────────────────────────┐        │
    │     ACQUIRE PARAMETER    │──── S102│
    └──────────┬───────────────┘        │
               ▼                        │
    ┌──────────────────────────┐        │
    │    EVALUATE PARAMETER    │──── S103│
    └──────────┬───────────────┘        │
               ▼                        │
    ┌──────────────────────────┐        │
    │ DETERMINE WHETHER TO END │──── S104│
    │   PARAMETER SEARCH       │        │
    └──────────┬───────────────┘        │
               ▼        S105            │
          ◇─────────────◇   NO         │
          │    END?     │──────────────┘
          ◇─────────────◇
               │ YES
               ▼
    ┌──────────────────────────┐
    │   OUTPUT BEST PARAMETER  │──── S106
    └──────────┬───────────────┘
               ▼
          ┌─────────────┐
          │     END     │
          └─────────────┘
```

# FIG. 2

UNNECESSARILY LONG
SEARCH DUE TO TOO
LARGE NUMBER OF
ITERATIONS FOR
CONVERGENCE JUDGMENT

OVERLOOKING OF BEST
PARAMETER DUE TO TOO
SMALL NUMBER OF
ITERATIONS FOR
CONVERGENCE JUDGMENT

PARAMETER
EVALUATION
VALUE

EVALUATION COUNT

PARAMETER
EVALUATION
VALUE

EVALUATION COUNT

# FIG. 3

PARAMETER
EVALUATION
VALUE

N-k

N

EVALUATION COUNT

SMALL DIFFERENCE MEANS THAT
CONVERGENCE HAS PROGRESSED
→ SET SMALLER NUMBER OF
ITERATIONS FOR CONVERGENCE
JUDGMENT

PARAMETER
EVALUATION
VALUE

N-k

N

EVALUATION COUNT

LARGE DIFFERENCE MEANS THAT
CONVERGENCE HAS YET TO PROGRESS
→ SET LARGE NUMBER OF ITERATIONS
FOR CONVERGENCE JUDGMENT

# FIG. 4

INFORMATION PROCESSING APPARATUS — 10

COMMUNICATION UNIT — 20

STORAGE UNIT — 30

CONTROL UNIT — 40

ISING PROBLEM INPUT UNIT — 41

PARAMETER EVALUATION UNIT — 43

CONVERGENCE JUDGMENT ITERATION NUMBER DETERMINATION UNIT — 44

PARAMETER ACQUISITION UNIT — 42

PARAMETER SEARCH END DETERMINATION UNIT — 45

SOLUTION SEARCH UNIT — 46

SOLUTION OUTPUT UNIT — 47

# FIG. 5

```
        ┌─────────────┐
        │    START    │
        └──────┬──────┘
               ▼
┌──────────────────────────────────┐
│       INPUT ISING PROBLEM        │  ～ S201
└──────────────┬───────────────────┘
               ▼
┌──────────────────────────────────┐
│ DETERMINE NUMBER OF ITERATIONS FOR│  ～ S202
│      CONVERGENCE JUDGMENT         │
└──────────────┬───────────────────┘
               ▼
┌──────────────────────────────────┐
│        ACQUIRE PARAMETER         │  ～ S203
└──────────────┬───────────────────┘
               ▼
┌──────────────────────────────────┐
│        EVALUATE PARAMETER        │  ～ S204
└──────────────┬───────────────────┘
               ▼
┌──────────────────────────────────┐
│ DETERMINE WHETHER TO END PARAMETER│  ～ S205
│             SEARCH               │
└──────────────┬───────────────────┘
               ▼            S206
         ◇─────────────────◇  NO
         ＼     END?      ／────┐
          ◇─────────────◇      │
               │ YES           │
               ▼               │
┌──────────────────────────────────┐
│        SEARCH SOLUTION           │  ～ S207
└──────────────┬───────────────────┘
               ▼
┌──────────────────────────────────┐
│        OUTPUT SOLUTION           │  ～ S208
└──────────────┬───────────────────┘
               ▼
        ┌─────────────┐
        │     END     │
        └─────────────┘
```

# FIG. 6

START

INPUT ISING PROBLEM — S301

ACQUIRE PARAMETER — S302

EVALUATE PARAMETER — S303

S304
N ITERATIONS HAVE BEEN EXECUTED? — NO

YES

S305
HAS NUMBER OF ITERATIONS FOR CONVERGENCE JUDGMENT BEEN DETERMINED? — NO

YES

S307
DETERMINE WHETHER TO END PARAMETER SEARCH

S306
DETERMINE NUMBER OF ITERATIONS FOR CONVERGENCE JUDGMENT

S308
END? — NO

YES

SEARCH SOLUTION — S309

OUTPUT SOLUTION — S310

END

# FIG. 7

START

INPUT ISING PROBLEM — S401

DETERMINE NUMBER OF ITERATIONS FOR CONVERGENCE JUDGMENT (TENTATIVE) — S402

ACQUIRE PARAMETER — S404

EVALUATE PARAMETER — S404

S405
N ITERATIONS HAVE BEEN EXECUTED? — NO

YES

S406
HAS NUMBER OF ITERATIONS FOR CONVERGENCE JUDGMENT BEEN DETERMINED? — NO

YES

DETERMINE WHETHER TO END PARAMETER SEARCH — S408

DETERMINE NUMBER OF ITERATIONS FOR CONVERGENCE JUDGMENT (FINAL) — S407

S409
END? — NO

YES

SEARCH SOLUTION — S410

OUTPUT SOLUTION — S411

END

# FIG. 8

INFORMATION PROCESSING APPARATUS — 10

PROCESSOR — 10d

MEMORY — 10c

COMMUNICATION INTERFACE — 10a

HDD — 10b

Europäisches
Patentamt
European
Patent Office
Office européen
des brevets

# EUROPEAN SEARCH REPORT

Application Number

EP 23 15 9591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATSUBARA SATOSHI ET AL: "Digital Annealer for High-Speed Solving of Combinatorial optimization Problems and Its Applications", 2020 25TH ASIA AND SOUTH PACIFIC DESIGN AUTOMATION CONFERENCE (ASP-DAC), IEEE, 13 January 2020 (2020-01-13), pages 667-672, XP033746210, DOI: 10.1109/ASP-DAC47756.2020.9045100 [retrieved on 2020-03-23] * page 667 - page 672, right-hand column, paragraph 5 * | 1-15 | INV. G06N7/01 |
| A | MAYOWA AYODELE: "Comparing the Digital Annealer with Classical Evolutionary Algorithm", ARXIV.ORG, CORNELL UNIVERSITY LIBRARY, 201 OLIN LIBRARY CORNELL UNIVERSITY ITHACA, NY 14853, 26 May 2022 (2022-05-26), XP091233785, * the whole document * | 1-15 | |
| A | EP 3 992 775 A1 (FUJITSU LTD [JP]) 4 May 2022 (2022-05-04) * the whole document * | 1-15 | TECHNICAL FIELDS SEARCHED (IPC) G06N |
| X,P | PARIZY MATTHIEU ET AL: "Fast Hyperparameter Tuning for Ising Machines", 2023 IEEE INTERNATIONAL CONFERENCE ON CONSUMER ELECTRONICS (ICCE), IEEE, 6 January 2023 (2023-01-06), pages 1-6, XP034297547, DOI: 10.1109/ICCE56470.2023.10043382 [retrieved on 2023-02-17] * the whole document * | 1-15 | |

The present search report has been drawn up for all claims

| Place of search | Date of completion of the search | Examiner |
|---|---|---|
| The Hague | 9 November 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 300 376 A1**

## ANNEX TO THE EUROPEAN SEARCH REPORT
## ON EUROPEAN PATENT APPLICATION NO.

EP 23 15 9591

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2023

| Patent document cited in search report | | Publication date | Patent family member(s) | | Publication date |
|---|---|---|---|---|---|
| EP 3992775 | A1 | 04-05-2022 | CN 114444015 A | | 06-05-2022 |
| | | | EP 3992775 A1 | | 04-05-2022 |
| | | | JP 2022072685 A | | 17-05-2022 |
| | | | US 2022138378 A1 | | 05-05-2022 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022032703 A
- JP 2021144443 A
- US 20210166148
- US 20200327441